# EUROPEAN PATENT SPECIFICATION

(11) **EP 3 924 692 B1**
(45) Date of publication and mention of the grant of the patent: **07.10.2026**
(21) Application number: 20710372.2
(22) Date of filing: 07.02.2020
(51) Int. Cl.: G01C 21/00, G01C 21/20, G01C 21/34, B62D 15/02, G05D 1/00, G08G 1/14, G06N 3/0464, G06N 3/09

(54) **AUTONOMOUS AND USER CONTROLLED VEHICLE SUMMON TO A TARGET**
AUTONOMER UND BENUTZERGESTEUERTER FAHRZEUGRUF ZU EINEM ZIEL
APPEL DE VÉHICULE AUTONOME ET COMMANDÉ PAR L'UTILISATEUR VERS UN OBJECTIF

(30) Priority: 11.02.2019 US 201916272273
(43) Date of publication of application: 22.12.2021
(60) Divisional application: 26201549.8
(73) Proprietor: Tesla, Inc., Austin, TX 78725 (US)
(72) Inventor: MUSK, Elon, Palo Alto, California 94304 (US); PARK, Kate, Palo Alto, California 94304 (US); UZUNOVIC, Nenad, San Carlos, California 94070 (US); MOORE, Christopher Coleman, Palo Alto, California 94304 (US); HAVLAK, Francis, Palo Alto, California 94304 (US); BOWERS, Stuart, Bothell, Washington 98021 (US); KARPATHY, Andrej, Palo Alto, California 94304 (US); RAMANANDAN, Arvind, Palo Alto, California 94304 (US); SUD, Ashima Kapur, Palo Alto, California 94304 (US); CHEN, Paul, Palo Alto, California 94304 (US); JAIN, Paril, Palo Alto, California 94304 (US); HERTZBERG, Alexander, Berkeley, California 94704 (US); KONG, Jason, San Francisco, California 94122 (US); WANG, Li, Palo Alto, California 94304 (US); ARSLAN, Oktay, Fremont, California 94538 (US); GUSTAFSSON, Nicklas, Palo Alto, California 94304 (US); SHIEH, Charles, Palo Alto, California 94304 (US); SEELIG, David, Palo Alto, California 94304 (US)
(74) Representative: Liesegang, Eva
(86) International application number: PCT/US2020/017316
(87) International publication number: WO 2020/167613

(56) References cited:
- DE-A1- 102016 219 698
- US-A1- 2017 329 346
- US-A1- 2019 004 524

## Description

### BACKGROUND OF THE INVENTION

Human drivers are typically required to operate vehicles and the driving tasks performed by them are often complex and can be exhausting. For example, retrieving or summoning a parked car from a crowded parking lot or garage can be inconvenient and tedious. The maneuver often involves walking towards one's vehicle, three-point turns, edging out of tight spots without touching neighboring vehicles or walls, and driving towards a location that one previously came from. Although some vehicles are capable of being remotely operated, the route driven by the vehicle is typically limited to a single straight-line path in either the forwards or reverse direction with limited steering range and no intelligence in navigating the vehicle along its own path.

Systems for automatically navigating a vehicle to a target location are known from US 2017/329346 A1, from US 2019/004524 A1 and from DE 10 2016 219698 A1. However, none of these systems uses an occupancy grid with entry values representing probabilities and/or costs associated with driving through a corresponding location.

### SUMMARY

An aspect of the present invention refers to a system according to claim 1. The system comprises a processor and a memory coupled to the processor and configured to provide the processor with instructions which, when executed, cause the processor to, among others: receive an identification of a geographical location associated with a target specified by a user remote from a vehicle; utilize a machine learning model to generate a representation of at least a portion of an environment surrounding the vehicle using sensor data from one or more sensors of the vehicle; calculate at least a portion of a path to a target location corresponding to the received geographical location using the generated representation of the at least portion of the environment surrounding the vehicle; and provide at least one command to automatically navigate the vehicle based on the determined path and updated sensor data from at least a portion of the one or more sensors of the vehicle. Preferred embodiments of the invention are defined in the dependent claims.

Another aspect of the present invention refers to a method according to claim 12. The method comprises, among others, receiving an identification of a geographical location associated with a target specified by a user remote from a vehicle; utilizing a neural network to generate a representation of at least a portion of an environment surrounding the vehicle using sensor data from one or more sensors of the vehicle; calculating at least a portion of a path to a target location corresponding to the received geographical location using the generated representation of the at least portion of the environment surrounding the vehicle; and providing at least one command to automatically navigate the vehicle based on the determined path and updated sensor data from at least a portion of the one or more sensors of the vehicle.

Yet another aspect of the present invention refers to a computer program product according to claim 13, the computer program product being embodied in a non-transitory computer readable storage medium and comprising computer instructions. The computing instructions are for, among others, receiving an identification of a geographical location associated with a target specified by a user remote from a vehicle; utilizing a neural network to generate a representation of at least a portion of an environment surrounding the vehicle using sensor data from one or more sensors of the vehicle; calculating at least a portion of a path to a target location corresponding to the received geographical location using the generated representation of the at least portion of the environment surrounding the vehicle; and providing at least one command to automatically navigate the vehicle based on the determined path and updated sensor data from at least a portion of the one or more sensors of the vehicle.

### BRIEF DESCRIPTION OF THE DRAWINGS

Various embodiments of the invention are disclosed in the following detailed description and the accompanying drawings.
Figure 1 is a flow diagram illustrating an embodiment of a process for automatically navigating a vehicle to a destination target.
Figure 2 is a flow diagram illustrating an embodiment of a process for receiving a target destination.
Figure 3 is a flow diagram illustrating an embodiment of a process for automatically navigating a vehicle to a destination target.
Figure 4 is a flow diagram illustrating an embodiment of a process for training and applying a machine learning model to generate a representation of an environment surrounding a vehicle.
Figure 5 is a flow diagram illustrating an embodiment of a process for generating an occupancy grid.
Figure 6 is a flow diagram illustrating an embodiment of a process for automatically navigating to a destination target.
Figure 7 is a block diagram illustrating an embodiment of an autonomous vehicle system for automatically navigating a vehicle to a destination target.
Figure 8 is a diagram illustrating an embodiment of a user interface for automatically navigating a vehicle to a destination target.
Figure 9 is a diagram illustrating an embodiment of a user interface for automatically navigating a vehicle to a destination target.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the appended claims and the invention encompasses numerous alternatives, modifications and equivalents within the scope of the appended claims. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

A technique to autonomously summon a vehicle to a destination is disclosed. A target geographical location is provided and a vehicle automatically navigates to the target location. For example, a user provides a location by dropping a pin on a graphical map user interface at the destination location. As another example, a user summons the vehicle to the user's location by specifying the user's location as the destination location. The user may also select a destination location based on viable paths detected for the vehicle. The destination location may update (for example if the user moves around) leading the car to update its path to the destination location. Using the specified destination location, the vehicle navigates by utilizing sensor data such as vision data captured by cameras to generate a representation of the environment surrounding the vehicle. According to the invention, the representation is an occupancy grid detailing drivable and non-drivable space. According to the invention, the occupancy grid is generated using a neural network from camera sensor data. The representation of the environment may be further augmented with auxiliary data such as additional sensor data (including radar data), map data, or other inputs. Using the generated representation, a path is planned from the vehicle's current location towards the destination location. In some embodiments, the path is generated based on the vehicle's operating parameters such as the model's turning radius, vehicle width, vehicle length, etc. An optimal path is selected based on selection parameters such as distance, speed, number of changes in gear, etc. As the vehicle automatically navigates using the selected path, the representation of the environment is continuously updated. For example, as the vehicle travels to the destination, new sensor data is captured and the occupancy grid is updated. Safety checks are continuously performed that can override or modify the automatic navigation. For example, ultrasonic sensors may be utilized to detect potential collisions. A user can monitor the navigation and cancel the summoned vehicle at any time. In some embodiments, the vehicle must continually receive a virtual heartbeat signal from the user for the vehicle to continue navigating. The virtual heartbeat may be used to indicate that the user is actively monitoring the progress of the vehicle. In some embodiments, the user selects the path and the user remotely controls the vehicle. For example, the user can control the steering angle, direction, and/or speed of the vehicle to remotely control the vehicle. As the user remotely controls the vehicle, safety checks are continuously performed that can override and/or modify the user controls. For example, the vehicle can be stopped if an object is detected.

In some embodiments, a system comprises a processor configured to receive an identification of a geographical location associated with a target specified by a user remote from a vehicle. For example, a user waiting at a pick up location specifies her or his geographical location as a destination target. The destination target is received by a vehicle parked in a remote parking spot. According to the invention, a machine learning model is utilized to generate a representation of at least a portion of an environment surrounding a vehicle using sensor data from one or more sensors of the vehicle. For example, sensors such as camera, radar, ultrasonic or other sensors capture data of the environment surrounding the vehicle. The data is fed as input to a neural network using a trained machine learning model to generate a representation of the environment surrounding the vehicle. According to the invention, the representation is an occupancy grid describing drivable space the vehicle can use to navigate through. According to the invention, at least a portion of a path is calculated to a target location corresponding to the received geographical location using the generated representation of at least the portion of the environment surrounding the vehicle. According to the invention, using an occupancy grid representing the environment surrounding the vehicle, a path is selected to navigate the vehicle to a target destination. Values at entries in the occupancy grid may be probabilities and/or costs associated with driving through the location associated with the grid entry. According to the invention, at least one command is provided to automatically navigate the vehicle based on the determined path and updated sensor data from at least a portion of the one or more sensors of the vehicle. For example, a vehicle controller uses the selected plan to provide actuator commands to control the vehicle's speed and steering. The commands are used to navigate the vehicle along the selected path. As the vehicle navigates, updated sensor data is captured to update the representation of the vehicle's surrounding environment. According to the invention, the system comprises a memory coupled to the processor and configured to provide the processor with instructions.

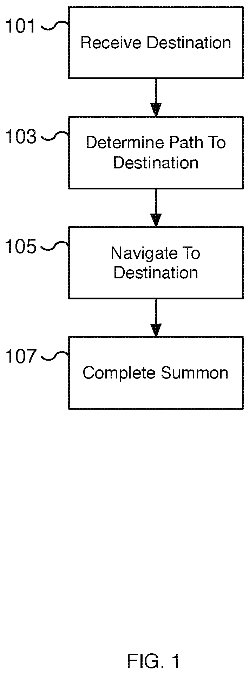

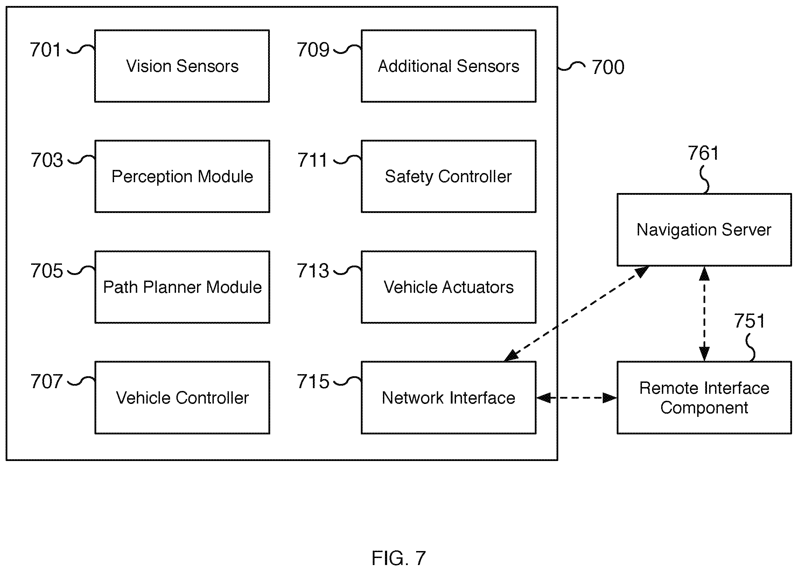

Figure 1 is a flow diagram illustrating an embodiment of a process for automatically navigating a vehicle to a destination target. In some embodiments, the process of Figure 1 is used to summon a vehicle to a geographical location specified by a user. The user may use a mobile app, the key fob, a GUI of the vehicle, etc. to specify a target location. Using the target location, the vehicle automatically navigates from its starting location to the target location. In some embodiments, the target location is the location of the user and the target location is dynamic. For example, as the user moves, the target destination of the vehicle moves to the new location of the user. In some embodiments, the target location is specified indirectly, such as via a calendar or planning software. For example, a calendar of the user is parsed and used to determine a target destination and time from calendar events. A calendar event may include the location of the event and a time, such as the ending time. The destination is selected based on the location of the event and the time is selected based on the ending time of the event. The vehicle automatically navigates to arrive at the location at the ending time, such as the end of a dinner party, a wedding, a restaurant reservation, etc. In some embodiments, the vehicle navigates to the target destination using a specified time, such as an arrival or departure time. For example, a user can specify the time the vehicle should begin automatically navigating or departing to the specified destination. As another example, a user can specify the time the vehicle should arrive at the specified destination. The vehicle will then depart in advance of the specified time in order to arrive at the destination at the specified time. In some embodiments, the arrival time is configured with a threshold time to allow for differences between the estimated travel time and the actual travel time. In various embodiments, the process of Figure 1 is run on an autonomous vehicle. In some embodiments, a remote server in communication with the autonomous vehicle executes portions of the summon functionality. In some embodiments, the process of Figure 1 is implemented at least in part using the autonomous vehicle system of Figure 7.

At 101, a destination is received. For example, a user selects a "find me" feature from a mobile application on a smartphone device. The "find me" feature determines the location of the user and transmits the user's location to a vehicle summon module. In various embodiments, the vehicle summon module is implemented across one or more modules that may exist on the vehicle and/or remote from the vehicle. In some embodiments, the target destination may not be the user's location. According to the invention, the user selects a location on a map that is the target destination. As another example, location may be based on a location associated with a calendar event. In some embodiments, the location is selected by dropping a pin icon on a map at the target destination. The location may be a longitude and latitude. In some embodiments, the location may include an altitude, elevation, or similar measure. For example, in a parking garage, the location includes an altitude component to distinguish between different floors of a multi-floor parking garage. In various embodiments, the destination is a geographical location.

In some embodiments, the destination includes a location as well as an orientation. For example, a car icon, a triangle icon, or another icon with an orientation is used to specify both a location and orientation. By specifying an orientation, the vehicle navigates to the selected target destination and faces the intended orientation that the user selects. In some embodiments, the orientation is determined by orientation suggestions, such as suggestions based on the environment, the user, other vehicles, and/or other appropriate inferences. For example, a map may be used to determine the proper orientation for vehicles, such as the direction vehicles should travel on a one-way road. As another example, based on lane lines, traffic signals, other vehicles, etc., the summon functionality determines an appropriate orientation of the road. For example, the direction other vehicles are facing can be used as an orientations suggestion. In some embodiments, the orientation is based on the orientation suggested by other autonomous vehicles. For example, in some embodiments, the vehicle summon functionality can communicate and/or query other vehicles to determine their orientation and use the provided result as an orientation suggestion. In various embodiments, one or more orientation suggestions are weighted and used to determine a target destination orientation.

In some embodiments, the destination is determined by fulfilling a query. For example, a user may request, for example using a GUI, voice, or another query type, her or his vehicle to arrive at a specified parking lot at a certain time. The destination is determined by querying a search engine, such as a map search database, for the destination parking lot. The user's calendar and/or address book may be used to refine the search results. Once the parking lot is identified, instructions and/or traffic flow for entering and/or exiting the parking lot are determined and used for selecting a destination. The destination is then provided to the vehicle summons module.

In some embodiments, the destination received is a multipart destination. For example, the destination requires arriving at one or more waypoints before reaching the final destination. The waypoints may be used to exercise additional control over the path the vehicle takes in navigating to the final destination. For example, the waypoints may be used to follow a preferred traffic pattern for an airport, parking lot, or another destination. The waypoints may be used to pick up one or more additional passengers, etc. For example, delays and/or pauses can be incorporated into the destination to pick up and/or drop off passengers or objects.

In some embodiments, the destination received is first passed through one or more validation and/or safety checks. For example, a destination may be limited based on distance such that a user can only select a destination within a certain distance (or radius) from the vehicle, such as 100 meters, 10 meters, or another appropriate distance. In some embodiments, the distance is based on local rules and/or regulations. In some embodiments, the destination location must be a valid stopping location. For example, a sidewalk, a crosswalk, an intersection, a lake, etc. are typically not valid stopping locations and the user may be prompted to select a valid location. In some embodiments, the destination received is modified from the user's initial selected destination to account for safety concerns, such as enforcing a valid stopping location.

At 103, a path to the destination is determined. For example, one or more paths are determined to navigate the vehicle from its current location to the destination received at 101. In some embodiments, the paths are determined using a path planner module, such as path planner module 705 of Figure 7. In various embodiments, the path planner module may be implemented using a cost function with appropriate weights applied to different paths to the destination. In some embodiments, the path selected is based on potential path arcs originating from the vehicle location. The potential path arcs are limited to the vehicle's operating dynamics, such as the vehicles steering range. In various embodiments, each potential path has a cost. For example, potential paths with sharp turns are have higher cost than paths that are smoother. As another example, a potential path with a large change in speed has higher cost than a path with a small change in speed. As yet another example, a potential path with more changes in gear (e.g., changes from reverse to forward) has higher cost than a path with fewer changes in gear. In some embodiments, a path with a higher likelihood of encountering certain objects is weighted differently than a path with a lower likelihood of encountering objects. For example, a path is weighted based on the likelihood of encountering pedestrians, vehicles, animals, traffic, poor lighting, poor weather, tolls, etc. In various embodiments, high cost paths are not preferred over lower cost paths when determining the path to take to the destination.

At 105, the vehicle navigates to the destination. Using the path to the destination determined at 103, the vehicle automatically navigates to the destination received at 101. In some embodiments, the path is made up of multiple smaller sub-paths. Different sub-paths may be implemented by traveling in different gears, such as forwards or reverse. In some embodiments, the paths include actions such as opening a garage door, closing a garage door, passing through a parking gate, waiting for a car lift, confirming a toll payment, charging, making a call, sending a message, etc. The additional actions may require stopping the vehicle and/or executing actions to manipulate the surrounding environment. In some scenarios, the final destination is a destination that is close to the destination received at 101. For example, in some scenarios, the destination received at 101 is not reachable so the final destination closely approximates reaching that destination. For example, in the event a user selects a sidewalk, the final destination is a position on a road adjacent to the sidewalk. As another example, in the event the user selects a crosswalk, the final destination is a position on a road near the crosswalk but not in the crosswalk.

In some embodiments, one or more safety checks are continuously confirmed while navigating. For example, auxiliary data such as sensor data from ultrasonic or other sensors is used to identify obstacles such as pedestrians, vehicles, speed bumps, traffic control signals, etc. A likelihood of a potential collision with the object terminates the current navigation and/or modifies the path to the destination. In some embodiments, the path to the destination includes the speed to travel along the path. As another example, in some embodiments, a heartbeat from the user's mobile application must be received for navigation to continue. The heartbeat may be implemented by requiring the user to maintain a connection with the vehicle being summoned, for example, by continuously pressing down a button GUI element in a mobile summon application. As another example, the user must continue to hold down a button (or maintain contact with a sensor) on the key fob for the vehicle to automatically navigate. In the event contact is lost, the automatic navigation will terminate. In some embodiments, the termination of the navigation safely slows down the vehicle and puts the vehicle in a safe, resting mode, such as parked along the side of the road, in a nearby parking space, etc. In some embodiments, loss of contact may, depending on the scenario, immediately stop the vehicle. For example, a user may release a summon button on the mobile app to indicate the vehicle should stop immediately, similar to a dead man's switch. In various embodiments, the deceleration applied to stop the vehicle depends on the environment of the vehicle (for example, whether other vehicles are traveling nearby such as behind the vehicle), whether there are potential collisions such as an obstacle or pedestrian in front of the path of the vehicle, the speed the vehicle is traveling, or other appropriate parameters. In some embodiments, the speed the vehicle travels is limited, for example, to a low maximum speed.

At 107, the vehicle summon functionality is completed. On completion, one or more completion actions may be executed. For example, a notification that the vehicle has reached the selected target destination is sent. In some embodiments, the vehicle reaches a destination that approximates that target destination and a notification is presented to the user of the vehicle's location. In some embodiments, the notification is sent to a mobile application, a key fob (e.g., indicated by a change in state associated with the key fob), via a text message, and/or via another appropriate notification channel. Additional directions may be provided to direct the user to the vehicle. In various embodiments, the vehicle may be placed into park and one or more vehicle settings may be triggered. For example, the interior lighting of the vehicle may be turned on. Floor lighting may be enabled to increase visibility for entering the vehicle. One or more exterior lights may be turned on, such as blinkers, parking, and/or hazard lights. Exterior lights, such as front headlights, may be activated to increase visibility for passengers approaching the vehicle. Actuated directional lights may be directed towards the expected direction from which passengers will be arriving to reach the vehicle. In some embodiments, audio notifications such as an audio alert or music are played. Welcome music or similar audio may be played in the cabin based on preferences of the user. Similarly, the climate control of the vehicle may be enabled to prepare the climate of the cabin for passengers such as warming up or cooling the cabin to a desired temperature and/or humidity. Seats may be heated (or ventilated). A heated steering wheel may be activated. Air vents can be redirected based on preferences. The doors may be unlocked and may be opened for the passengers. In the event the destination is an electric charging station, the vehicle can be oriented so that its charger port aligns with the charger. In some embodiments, a user can configure the preferences of the vehicle, including cabin climate, interior lighting, exterior lighting, audio system, and other vehicle preferences, in anticipation of passengers.

In various embodiments, the location of the vehicle is updated during and upon summon completion. For example, the updated location may be reflected in a companion mobile application. In some embodiments, a completion action includes updating an annotated map of the traversed path and encountered environment with recently captured and analyzed sensor data. The annotated map may be updated to reflect potential obstacles, traffic signals, parking preferences, traffic patterns, pedestrian walking patterns, and/or other appropriate path planning metadata that may be useful for future navigation and/or path planning. For example, a speed bump, crosswalk, potholes, empty parking spots, charging locations, gas stations, etc. that are encountered are updated to an annotated map. In some embodiments, the data corresponding to the encounters is used as potential training data to improve summon functionality, such as the perception, path planning, safety validation, and other functionality, for the current vehicle/user as well as other vehicles and users. For example, empty parking spots may be used for the path planning of other vehicles. As another example, an electric charging station or gas station is used for path planning. The vehicle can be routed to an electric charging station and oriented so that its charger port aligns with the charger.

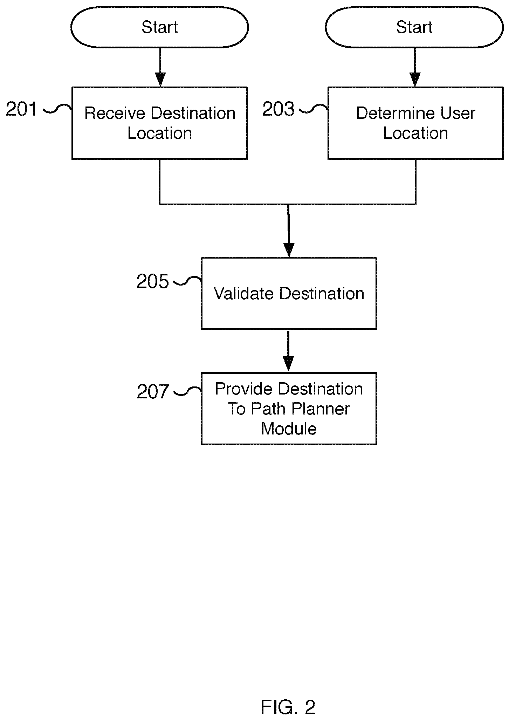

Figure 2 is a flow diagram illustrating an embodiment of a process for receiving a target destination. In some embodiments, a target destination is selected and/or provided by a user. The destination target is associated with a geographical location and used as a goal for automatically navigating a vehicle. In the example shown, the process of receiving a target destination can be initiated from more than one start point. The two start points of Figure 2 are two examples of initiating the receipt of a destination. Additional methods are possible as well. In some embodiments, the process of Figure 2 is performed at 101 of Figure 1.

At 201, a destination location is received. In some embodiments, the destination is provided as a geographical location. For example, longitude and latitude values are provided. In some embodiments, an altitude is provided as well. For example, an altitude associated with a particular floor of a parking garage is provided. In various embodiments, the destination location is provided from a user via a smartphone device, via the media console of a vehicle, or by another means. In some embodiments, the location is received along with a time associated with departing or arriving at the destination. In some embodiments, one or more destinations are received. For example, in some scenarios, a multi-step destination is received that includes more than one stop. In some embodiments, the destination location includes an orientation or heading. For example, the heading indicates the direction the vehicle should face once it has arrived at the destination.

At 203, a user location is determined. For example, the location of the user is determined using a global positioning system or another location aware technique. In some embodiments, the user's location is approximated by the location of a key fob, a smartphone device of the user, or another device in the user's control. In some embodiments, the user's location is received as a geographical location. Similar to 201, the location may be a longitude and latitude pair and in some embodiments, may include an altitude. In some embodiments, the user's location is dynamic and is continuously updated or updated at certain intervals. For example, the user can move to a new location and the location received is updated. In some embodiments, the destination location includes an orientation or heading. For example, the heading indicates the direction the vehicle should face once it has arrived at the destination.

At 205, a destination is validated. For example, the destination is validated to confirm that the destination is reachable. In some embodiments, the destination must be within a certain distance from the vehicle originating location. For example, certain regulations may require a vehicle is limited to automatically navigating no more than 50 meters. In various embodiments, an invalid destination may require the user to supply a new location. In some embodiments, an alternative destination is suggested to the user. For example, in the event a user selects the wrong orientation, a suggested orientation is provided. As another example, in the event a user selects a no-stopping area, the valid stopping area such as the closest valid stopping area is suggested. Once validated, the selected destination is provide to step 207.

At 207, the destination is provided to a path planner module. In some embodiments, a path planner module is used to determine a route for the vehicle. At 207, the validated destination is provided to the path planner module. In some embodiments, the destination is provided as one or more locations, for example, a destination with multiple stops. The destination may include a two-dimensional location, such as a latitude and longitude location. Alternatively, in some embodiments, a destination includes an altitude. For example, certain drivable areas, such as multi-level parking garages, bridges, etc., have multiple drivable planes for the same two-dimensional location. The destination may also include a heading to specify the orientation the vehicle should face when arriving at the destination. In some embodiments, the path planner module is path planner module 705 of Figure 7.

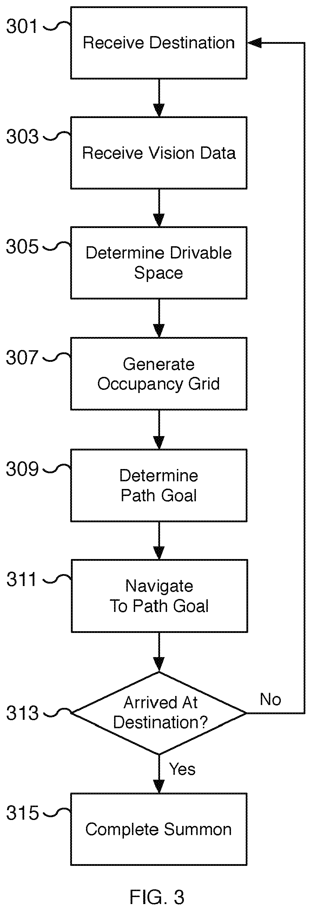

Figure 3 is a flow diagram illustrating an embodiment of a process for automatically navigating a vehicle to a destination target. For example, using the process of Figure 3, a representation of an environment surrounding a vehicle is generated and used to determine one or more paths to a destination. A vehicle automatically navigates using the determined path(s). As additional sensor data is updated, the representation surrounding the environment is updated. In some embodiments, the process of Figure 3 is performed using the autonomous vehicle system of Figure 7. In some embodiments, the step of 301 is performed at 101 of Figure 1, the steps of 303, 305, 307, and/or 309 are performed at 103 of Figure 1, the steps of 311 and/or 313 are performed at 105 of Figure 1, and/or the step of 315 is performed at 107 of Figure 1. In some embodiments, a neural network is used to direct the path the vehicle follows. For example, using a machine learning network, steering and/or acceleration values are predicted to navigate the vehicle to follow a path to the destination target.

At 301, a destination is received. For example, a geographical location is received via a mobile app, a key fob, via a control center of the vehicle, or another appropriate device. In some embodiments, the destination is a location and an orientation. In some embodiments, the destination includes an altitude and/or a time. In various embodiments, the destination is received using the process of Figure 2. In some embodiments, the destination is dynamic and a new destination may be received as appropriate. For example, in the event a user selects a "find me" feature, the destination is updated to follow the location of the user. Essentially the vehicle can follow the user like a pet.

At 303, vision data is received. According to the invention, using one or more camera sensors affixed to the vehicle, camera image data is received. In some embodiments, the image data is received from sensors covering the environment surrounding the vehicle. The vision data may be preprocessed to improve the usefulness of the data for analysis. For example, one or more filters may be applied to reduce noise of the vision data. In various embodiments, the vision data is continuously captured to update the environment surrounding the vehicle.

At 305, drivable space is determined. In some embodiments, the drivable space is determined using a neural network by applying inference on the vision data received at 303. For example, a convolutional neural network (CNN) is applied using the vision data to determine drivable and non-drivable space for the environment surrounding the vehicle. Drivable space includes areas that the vehicle can travel. In various embodiments, the drivable space is free of obstacles such that the vehicle can travel using a path through the determined drivable space. In various embodiments, a machine learning model is trained to determine drivable space and deployed on the vehicle to automatically analyze and determine the drivable space from image data.

According to the invention, the vision data is supplemented with additional data such as additional sensor data. Additional sensor data may include ultrasonic, radar, lidar, audio, or other appropriate sensor data. Additional data may also include annotated data, such as map data. For example, an annotated map may annotate vehicle lanes, speed lines, intersections, and/or other driving metadata. The additional data may be used as input to a machine learning model or consumed downstream when creating the occupancy grid to improve the results for determining drivable space.

At 307, an occupancy grid is generated. Using the drivable space determined at 305, an occupancy grid representing the environment of the vehicle is generated. In some embodiments, the occupancy grid is a two-dimensional occupancy grid representing the entire plane (e.g., 360 degrees along longitude and latitude axes) the vehicle resides in. In some embodiments, the occupancy grid includes a third dimension to account for altitude. For example, a region with multiple drivable paths at different altitudes, such as a multi-floor parking structure, an overpass, etc., can be represented by a three-dimensional occupancy grid.

According to the invention, the occupancy grid contains drivability values at each grid location that corresponds to a location in the surrounding environment. The drivability value at each location is a probability that the location is drivable. For example, a sidewalk may be designed to have a zero drivability value while gravel has a 0.5 drivability value. The drivability value may be a normalized probability having a range between 0 and 1 and is based on the drivable space determined at 305. According to the invention, each location of the grid includes a cost metric associated with the cost (or penalty/reward) of traversing through that location. The cost value of each grid location in the occupancy grid is based on the drivable value. The cost value may further depend on additional data such as preference data. For example, path preferences can be configured to avoid toll roads, carpool lanes, school zones, etc. In various embodiments, the path preference data can be learned via a machine learning model and is determined at 305 as part of drivable space. In some embodiments, the path preference data is configured by the user and/or an operator to optimize the path taken for navigation to the destination received at 301. For example, the path preferences can be optimized to improve safety, convenience, travel time, and/or comfort, among other goals. In various embodiments, the preferences are additional weights used to determine the cost value of each location grid.

In some embodiments, the occupancy grid is updated with auxiliary data such as additional sensor data. For example, ultrasonic sensor data capturing nearby objects is used to update the occupancy grid. Other sensor data such as lidar, radar, audio, etc. may be used as well. In various embodiments, an annotated map may be used in part to generate the occupancy grid. For example, roads and their properties (speed limit, lanes, etc.) can be used to augment the vision data for generating the occupancy grid. As another example, occupancy data from other vehicles can be used to update the occupancy grid. For example, a neighboring vehicle with similarly equipped functionality can share sensor data and/or occupancy grid results.

In some embodiments, the occupancy data is initialized with the last generated occupancy grid. For example, the last occupancy grid is saved when a vehicle is no longer capturing new data and/or is parked or turned off. When the occupancy grid is needed, for example, when a vehicle is summoned, the last generated occupancy grid is loaded and used as an initial occupancy grid. This optimization significantly improves the accuracy of the initial grid. For example, some objects may be difficult to detect from a stand still but will have been detected in the last save occupancy grid when the vehicle was moving as it approached the current parked location.

At 309, a path goal is determined. Using the occupancy grid, a search is performed to determine a path to navigate the vehicle from its current location to the destination received at 301. The potential paths are based in part on the operating characteristics of the vehicle such as the turn radius, vehicle width, vehicle length, etc. Each vehicle model may be configured with particular vehicle operating characteristics. In some embodiments, path finding is configured to implement configurable limitations and/or goals. Example limitations include a vehicle cannot travel sideways, a vehicle should limit the number of sharp turns, the vehicle should limit the number of changes in gear (e.g., from reverse to forward or vice versa), etc. The limitations/goals may be implemented as weighted costs in a cost function. In various embodiments, the initial position of the vehicle includes an x, y, and heading value. The x and y values may correspond to longitude and latitude values. One or more potential paths are determined originating from the initial position towards reaching the goal. In some embodiments, the paths are made up of one or more path primitives, such as arc primitives. The path primitives describe a path (and a path goal) that a vehicle can navigate along to reach the destination.

According to the invention, the selected path goal is selected based on a cost function. A cost function is performed on each of the potential paths. Each potential path traverses through a set of grids of the occupancy grid, where each grid has a cost value to reward or penalize traveling through the grid's location. The path with the optimal cost value is selected as the path goal. The path goal may include one or more path primitives, such as arcs, to model the motion of a navigating vehicle. For example, a pair of two path primitives can express moving a vehicle in reverse and then moving forward. The reverse path is represented as one arc and the forward path is represented as another arc. As another example, the vehicle path may include a three-point turn. Each primitive of the turn can be expressed as an arc path. At the end of each path primitive, the vehicle will have a new x, y, and heading value. In some embodiments, the vehicle includes an altitude value, for example, to support navigation between different floors of a parking garage. Although arc path primitives are used to define the goal path, other appropriate geometric primitives may be used as well. In some embodiments, each path includes speed parameters. For example, a speed parameter can be used to suggest travel speeds along the path. An initial speed, a max speed, an acceleration, a max acceleration, and other speed parameters can be used to control how the vehicle navigates along the path. In some embodiments, a maximum speed is set to a low speed and used to keep the vehicle from traveling too quickly. For example, a low maximum speed may be enforced to allow a user to quickly intervene.

According to the invention, the determined path goal is passed to a vehicle controller to navigate along the path. In some embodiments, the path goal is first converted to a set of path points along the path for use by the vehicle controller. In some embodiments, the path planning is run continuously and a new path can be determined while a current path is being traversed. In some embodiments, the intended path is no longer reachable, for example, the path is blocked and a new path is determined. The path planning at 309 may be run at a lower frequency than the other functionality of the process of Figure 3. For example, the path planning may be run at a lower frequency than drivable space is determined at 305 and/or the vehicle is controlled to navigate at 311. By determining the path goal less frequently than an occupancy grid is updated, the path planning processing is more efficient and utilizes a more accurate representation of the world.

In some embodiments, more than one route to the destination is viable and multiple path goals are provided to the user. For example, the user is shown two or more path goals as options. The user can select, for example, using a GUI, a voice command, etc., a path goal to use for navigating the vehicle to the destination. As an example, a user is shown two paths from the vehicle to the destination. The first path is estimated to take less time but has more turns and requires frequent gear changes. The second path is smoother but takes more time. The user can select a path goal from the two options. In some embodiments, the user can select a path goal and modify the route. For example, the user can adjust the route selected to navigate around a particular obstacle, such as a busy intersection.

At 311, the vehicle automatically navigates to a path goal. Using the path goal or goals determined at 309, a vehicle automatically navigates from its current location along the goal path(s) to reach an arrival destination. For example, a vehicle controller receives the goal path(s) and in turn implements the vehicle controls needed to navigate the vehicle along the path. The path goal(s) may be received as a set of path points along the path to navigate. In some embodiments, the vehicle controller converts path primitives, such as arcs, to path points. In various embodiments, the vehicle is controlled by sending actuator parameters from the vehicle controller to vehicle actuators. In some embodiments, the vehicle controller is vehicle controller 707 of Figure 7 and vehicle actuators are vehicle actuators 713 of Figure 7. Using the vehicle actuators, the steering, braking, acceleration, and/or other operating functionality is actuated.

In some embodiments, as the vehicle navigates to the path goal, the user can adjust the navigation/operations of the vehicle. For example, the user can adjust the navigation by providing inputs such as "steer more to the left." As additional examples, the user can increase or decrease the speed of the vehicle while navigating and/or adjust the steering angle.

At 313, a determination is made whether the vehicle has arrived at the destination received at 301. In the event the vehicle has arrived at the destination, processing continues to 315. In the event the vehicle has not arrived at the destination, processing loops back to 301 to potentially receive an updated destination and automatically navigate to the (potentially updated) selected destination. In various embodiments, a vehicle has arrived at the destination but may not be at the exact location of the destination. For example, the selected destination may not be or may no longer be a drivable location. As one example, another vehicle may be parked in the selected destination. As yet another example, the user may be moved to a location, such as a passenger waiting area, which is not drivable. In certain situations, a vehicle is determined to have arrived at the destination in the event the vehicle has arrived at a location determined to be closest reachable to the destination. The closest reachable destination may be based on the path determined at 309. In some embodiments, the closest reachable destination is based on a cost function used to calculate potential paths between the current location and the destination. In some embodiments, the difference between the arrived location and the received destination is based on the accuracy of the technology available to determine location. For example, the vehicle may be parked within the accuracy of an available global positioning system.

At 315, summon is complete. In various embodiments, the summon functionality is completed and one or more completion actions are executed. For example, completion actions described with respect to 107 of Figure 1 are performed. In some embodiments, the occupancy grid generated at 307 is saved and/or exported as a completion action. The occupancy grid may be saved local to the vehicle and/or to a remote server. Once saved, the grid can be used by the vehicle and/or shared to other vehicles with potentially overlapping paths.

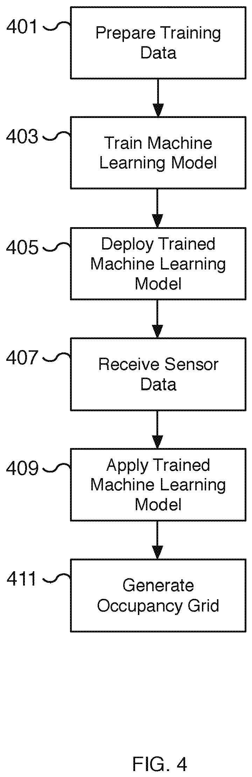

Figure 4 is a flow diagram illustrating an embodiment of a process for training and applying a machine learning model to generate a representation of an environment surrounding a vehicle. In some embodiments, the process of Figure 4 is used to determine drivable space for generating an occupancy grid using at least in part sensor data. The sensor data used for training and/or the application of the trained machine learning model may correspond to image data captured from a vehicle using camera sensors. In some embodiments, the process is used to create and deploy a machine learning model for the autonomous vehicle system of Figure 7. In some embodiments, the process of Figure 4 is used to determine drivable space at 305 of Figure 3 and to generate an occupancy grid at 307 of Figure 3.

At 401, training data is prepared. In some embodiments, sensor data including image data is utilized to create a training data set. The sensor data may include still images and/or video from one or more cameras. Additional sensors such as radar, lidar, ultrasonic, etc. may be used to provide relevant sensor data. In various embodiments, the sensor data is paired with corresponding vehicle data to help identify features of the sensor data. For example, location and change in location data can be used to identify the location of relevant features in the sensor data such as lane lines, traffic control signals, objects, etc. In some embodiments, the training data is prepared to train a machine learning model to identify drivable space. The prepared training data may include data for training, validation, and testing. In some embodiments, the format of the data is compatible with a machine learning model used on a deployed deep learning application.

At 403, a machine learning model is trained. For example, a machine learning model is trained using the data prepared at 401. In some embodiments, the model is a neural network such as a convolutional neural network (CNN). In various embodiments, the model includes multiple intermediate layers. In some embodiments, the neural network may include multiple layers including multiple convolution and pooling layers. In some embodiments, the training model is validated using a validation data set created from the received sensor data. In some embodiments, the machine learning model is trained to predict drivable space from image data. For example, drivable space of an environment surrounding a vehicle can be inferred from an image captured from a camera. In some embodiments, the image data is augmented with other sensor data such as radar or ultrasonic sensor data for improved accuracy.

At 405, the trained machine learning model is deployed. For example, the trained machine learning model is installed on a vehicle as an update for a deep learning network. In some embodiments, the deep learning network is part of a perception module such as perception module 703 of Figure 7. The trained machine learning model may be installed as an over-the-air update. In some embodiments, the update is a firmware update transmitted using a wireless network such as a WiFi or cellular network. In some scenarios, the newly trained machine learning model is installed when the vehicle is serviced.

At 407, sensor data is received. For example, sensor data is captured from one or more sensors of the vehicle. In some embodiments, the sensors are vision sensors, such as vision sensors 701 of Figure 7 used to capture vision data, and/or additional sensors 709 of Figure 7. Vision sensors may include image sensors such as a camera mounted behind a windshield, forward and/or side facing cameras mounted in the pillars, rear-facing cameras, etc. In various embodiments, the sensor data is in the format or is converted into a format that the machine learning model trained at 403 utilizes as input. For example, the sensor data may be raw or processed image data. In some embodiments, the sensor data is data captured from ultrasonic sensors, radar, LiDAR sensors, microphones, or other appropriate technology. In some embodiments, the sensor data is preprocessed using an image pre-processor such as an image pre-processor during a pre-processing step. For example, the image may be normalized to remove distortion, noise, etc.

At 409, the trained machine learning model is applied. For example, the machine learning model trained at 403 is applied to sensor data received at 407. In some embodiments, the application of the model is performed by a perception module such as perception module 703 of Figure 7 using a deep learning network. In various embodiments, by applying the trained machine learning model, drivable space is identified and/or predicted. For example, drivable space in an environment surrounding a vehicle is inferred. In various embodiments, vehicles, obstacles, lanes, traffic control signals, map features, object distances, speed limits, etc. are identified by applying the machine learning model. The detected features may be used to determine drivable space. In some embodiments, traffic control and other driving features are used to determine navigation parameters, such as speed limits, locations to stop, areas to park, orientation to face, etc. For example, stop signs, parking spaces, lane lines, and other traffic control features are detected and utilized for determining drivable space and driving parameters.

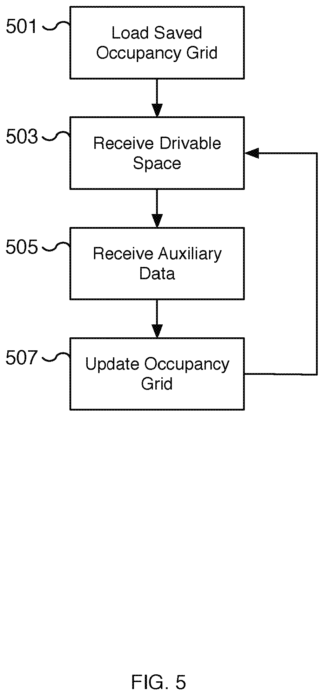

At 411, an occupancy grid is generated. For example, using the output of the trained machine learning model applied at 409, an occupancy grid is generated for path planning to determine a goal path for navigating a vehicle. The occupancy grid may be generated as described with respect to 307 of Figure 3 and/or using the process of Figure 5.

Figure 5 is a flow diagram illustrating an embodiment of a process for generating an occupancy grid. For example, using the drivable space determined from sensor data, an occupancy grid can be generated for path planning. The occupancy grid can be augmented with additional sensor data, metadata from additional sources, such as annotated maps, and/or previously generated occupancy grids. In some embodiments, the process of Figure 5 is performed at 103 of Figure 1, 307 of Figure 3, and/or 411 of Figure 4. In some embodiments, the process of Figure 5 is performed using the autonomous vehicle system of Figure 7.

In some embodiments, the occupancy grid is generated prior to route planning. For example, the occupancy grid is generated and then presented to the user to examine, such as via a GUI on a smartphone device or via a display in the vehicle. The user can view the occupancy grid and select a target destination. The user can specify which part of the curb the user would like the vehicle to pull up to. Once selected, the vehicle can navigate to the target destination.

At 501, a saved occupancy grid is loaded. In some embodiments, a previously generated occupancy grid that corresponds to the vehicle's current location is loaded. By initializing the occupancy grid with a previously saved occupancy grid, the accuracy of the environment surrounding the vehicle can be improved. This optimization significantly improves the accuracy of the initial grid. For example, some objects may be difficult to detect from a stand still but will have been detected in the last saved occupancy grid when the vehicle was moving as it approached the current parked location.

At 503, drivable space is received. For example, drivable space is received as output from a neural network such as a convolutional neural network. In some embodiments, the drivable space is updated continuously as new sensor data is captured and analyzed. The received drivable space may be segmented into grid locations. In some embodiments, other vision-based measurements in addition to drivable space are received. For example, objects such as curbs, vehicles, pedestrians, cones, etc. are detected and received.

At 505, auxiliary data is received. For example, auxiliary data is used to update and further refine the accuracy of the occupancy grid. Auxiliary data may include data from sensors such as ultrasonic sensors or radar. Auxiliary data may also include occupancy data generated from other vehicles. For example, a mesh network of vehicles may share occupancy data based on the time and location of the occupancy data. As another example, an annotated map data may be used to augment the occupancy grid. Map data such as speed limits, lanes, drivable spaces, traffic patterns, etc. may be loaded via annotated map data.

In some embodiments, safety data used to override or modify navigation is received as auxiliary data. For example, a collision warning system inputs data at 505 used to override grid values to account for potential or pending collision. In some embodiments, auxiliary data includes data provided from the user. For example, the user may include an image or video to help identify a destination, such as a parking location and/or orientation. The received data may be used to modify the occupancy grid.

At 507, an occupancy grid is updated. Using the data received at 503 and/or 505, the occupancy grid is updated. The updated grid may include values at each grid location corresponding to a probability value of the grid location. The values may be cost values associated with navigating through the grid location. In some embodiments, values also include drivable values corresponding to the probability the grid location is a drivable area. In various embodiments, the updated occupancy grid may be saved and/or exported. For example, the grid data may be uploaded to a remote server or saved locally. As an example, when a vehicle is parked, the grid data may be saved and used to initialize the grid at a later time. As another example, the grid data may be shared with related vehicles, such as vehicles whose paths or potential paths intersect.

Once the occupancy grid is updated, processing loops back to 503 to continuously update the occupancy grid with newly received data. For example, as the vehicle navigates along a path, new drivable and/or auxiliary data is received to update the occupancy grid. The newly updated grid may be used to refine and/or update the goal path used for automatic navigation. For example, previously empty spaces may now be blocked. Similarly, previously blocked spaces may be open.

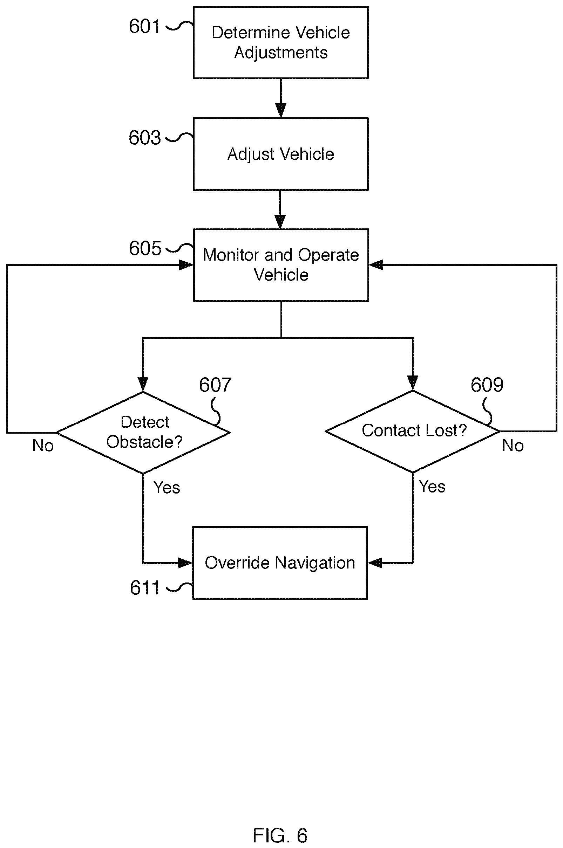

Figure 6 is a flow diagram illustrating an embodiment of a process for automatically navigating to a destination target. The process of Figure 6 may be used to navigate a vehicle using a determined plan goal from its current location towards a destination target location. In various embodiments, the navigation is performed automatically by a vehicle controller using vehicle actuators to modify the steering and speed of the vehicle. The process of Figure 6 implements multiple safety checks to improve the safety of navigating the vehicle. Safety checks allow the navigation to be terminated and/or modified. For example, virtual heartbeat can be implemented that requires a user to continuously maintain contact to the vehicle to confirm the user is monitoring the vehicle's progress. In some embodiments, the navigation utilizes a path goal to navigate the vehicle along an optimal path to the destination target. The path goal may be received as path primitives, such as arcs, a set of points along the selected path, and/or another form of path primitives. In some embodiments, the process of Figure 6 is performed at 105 of Figure 1 and/or 311 of Figure 3. In some embodiments, the process is performed using the autonomous vehicle system of Figure 7.

In some embodiments, the process of Figure 6 may be used by a user to remotely control a vehicle. For example, the user can control the steering angle, direction, and/or speed of the vehicle to remotely control the vehicle via vehicle adjustments. As the user remotely controls the vehicle, safety checks are continuously performed that can override and/or modify the user controls. For example, the vehicle can be stopped if an object is detected or contact with the remote user is lost.

At 601, vehicle adjustments are determined. For example, vehicle speed and steering adjustments are determined to maintain the vehicle on the path goal. In some embodiments, the vehicle adjustments are determined by a vehicle controller such as vehicle controller 707 of Figure 7. In some embodiments, the vehicle controller determines the distance, speed, orientation, and/or other driving parameters for controlling the vehicle. In some embodiments, a maximum vehicle speed is determined and used to limit the speed of the vehicle. The maximum speed may be enforced to increase the safety of the navigation and/or allow the user sufficient reaction time to terminate a summon functionality.

At 603, the vehicle is adjusted to maintain its course along a path goal. For example, the vehicle adjustments determined at 601 are implemented. In some embodiments, vehicle actuators such as vehicle actuator 713 of Figure 7 implement the vehicle adjustments. The vehicle actuators adjust the steering and/or speed of the vehicle. In various embodiments, all adjustments are logged and can be uploaded to a remote server for later review. For example, in the event of a safety concern, the vehicle actuations, path goal, destination location, current location, travel speed, and/or other driving parameters may be reviewed to identify potential areas of improvement.

At 605, the vehicle is operated according to vehicle adjustments and the operation of the vehicle is monitored. For example, the vehicle operates as directed by the vehicle adjustments applied at 603. In various embodiments, the vehicle's operation is monitored to enforce safety, comfort, performance, efficiency, and other operating parameters.

At 607, a determination is made whether an obstacle is detected. In the event an obstacle is detected, processing continues to 611. In the event an obstacle is not detected, processing continues to 605 where the vehicle's operating continues to be monitored. In some embodiments, obstacles are detected by collision or object sensors, such as an ultrasonic sensor. In some embodiments, obstacles may be communicated via a network interface. For example, obstacles detected by another vehicle may be shared and received. In various embodiments, a detected obstacle may be used to inform other components of the autonomous vehicle system, such as those related to occupancy grid generation, but is also received at a navigation component to allow the vehicle to immediately adjust for the detected obstacle.

At 609, a determination is made whether contact with the user is lost. In the event contact with the user is lost, processing continues to 611. In the event a contact with the user is not lost, processing continues to 605 where the vehicle's operating continues to be monitored. In some embodiments, constant contact with the user is required to activate automatic navigation. For example, a virtual heartbeat is sent from the user. The heartbeat may be sent from a smartphone device of the user or another appropriate device such as a key fob. In some embodiments, as long as the user activates the virtual heartbeat, the virtual heartbeat will be received and contact will not be lost. In response to the user no longer sending the virtual heartbeat, contact with the user is considered lost and the navigation of the vehicle responds appropriately at 611.

In some embodiments, the virtual heartbeat is implemented (and continuously sent to maintain contact) as long as the user makes continuous contact with a heartbeat switch, button, or other user interface device. Once the user breaks contact with the appropriate user interface element, the virtual heartbeat is no longer transmitted and contact is lost.

At 611, navigation is overridden. In response to a detected obstacle and/or contact lost with the user, automatic navigation is overridden. For example, in the event the vehicle is traveling at a slow speed, the vehicle can immediately stop. In the event the vehicle is traveling at a higher speed, the vehicle safely stops. A safe stop may require gradual braking and determining a safe stopping location, such as the side of the road or a parking spot. In various embodiments, an overridden navigation may require the user to proactively continue the automatic navigation. In some embodiments, an overridden navigation resumes once the detected obstacle is no longer present.

In some embodiments, in the event a detected obstacle overrides the navigation, the vehicle is rerouted to the destination using a new path. For example, a new path goal is determined that avoids the detected obstacle. In various embodiments, the occupancy grid is updated with the detected obstacle and the updated occupancy grid is used to determine the new path goal. Once a viable new path is determined, navigation may continue when appropriate, for example, once contact is reestablished. In some embodiments, new paths are determined when navigation is overridden. For example, when contact is lost, the path to the destination is reconfirmed. The existing path may be used if appropriate or a new path may be selected. In various embodiments, the vehicle remains stopped if no viable path can be found. For example, the vehicle is completely blocked.

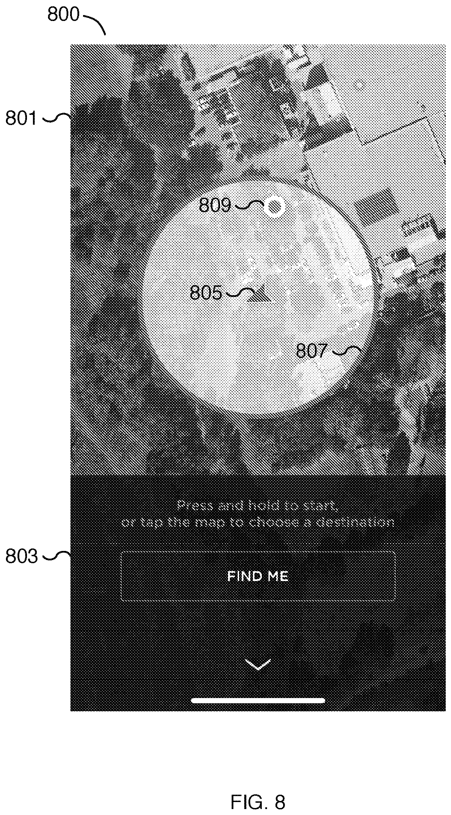

Figure 7 is a block diagram illustrating an embodiment of an autonomous vehicle system for automatically navigating a vehicle to a destination target. The autonomous vehicle system includes different components that may be used together to navigate a vehicle automatically to a target geographical location. In the example shown, the autonomous vehicle system includes onboard components 700, remote interface component 751, and navigation server 761. Onboard components 700 are components installed on the vehicle. Remote interface component 751 is one or more remote components that may be used remotely from the vehicle to automatically navigate the vehicle. For example, remote interface component 751 includes a smartphone application running on a smartphone device, a key fob, a GUI such as a website to control the vehicle, and/or another remote interface component. Navigation server 761 is an optional server used to facilitate navigation features. Navigation server 761 is a remote server and can function as a remote cloud server and/or storage. In some embodiments, the autonomous vehicle system of Figure 7 is used to implement the processes of Figures 1-6 and the functionality associated with the user interfaces of Figure 8-9.

In the example shown, onboard components 700 is an autonomous vehicle system that includes vision sensors 701, perception module 703, path planner module 705, vehicle controller 707, additional sensors 709, safety controller 711, vehicle actuators 713, and network interface 715. In various embodiments, the different components are communicatively connected. For example, sensor data from vision sensors 701 and additional sensors 709 are fed to perception module 703. Output of perception module 703 is fed to path planner module 705. The output of path planner module 705 and sensor data from additional sensors 709 is fed to vehicle controller 707. In some embodiments, the output of vehicle controller 707 is vehicle control commands that are fed to vehicle actuators 713 for controlling the operation of the vehicle such as the speed, braking, and/or steering, etc. of the vehicle. In some embodiments, sensor data from additional sensors 709 is fed to vehicle actuators 713 to perform additional safety checks. In various embodiments, safety controller 711 is connected to one or more components such as perception module 703, vehicle controller 707, and/or vehicle actuators 713 to implement safety checks at each module. For example, safety controller 711 may receive additional sensor data from additional sensors 709 for overriding automatic navigation.

In various embodiments, sensor data, machine learning results, perception module results, path planning results, safety controller results, etc. can be sent to navigation server 761 via network interface 715. For example, sensor data can be transmitted to a navigation server 761 via network interface 715 to collect training data for improving the performance, comfort, and/or safety of the vehicle. In various embodiments, network interface 715 is used to communicate with navigation server 761, to make phone calls, to send and/or receive text messages, and to transmit sensor data based on the operation of the vehicle, among other reasons. In some embodiments, onboard components 700 may include additional or fewer components as appropriate. For example, in some embodiments, onboard components 700 include an image pre-processor (not shown) to enhance sensor data. As another example, an image pre-processor may be used to normalize an image or to transform an image. In some embodiments, noise, distortion, and/or blurriness is removed or reduced during a pre-processing step. In various embodiments, the image is adjusted or normalized to improve the result of machine learning analysis. For example, the white balance of the image is adjusted to account for different lighting operating conditions such as daylight, sunny, cloudy, dusk, sunrise, sunset, and night conditions, among others. As another example, an image captured with a fisheye lens may be warped and an image pre-processor may be used to transform the image to remove or modify the warping. In various embodiments, one or more components of onboard components may be distributed to a remote server such as navigation server 761.

In some embodiments, vision sensors 701 include one or more vision sensors. In various embodiments, vision sensors 701 may be affixed to a vehicle, at different locations of the vehicle, and/or oriented in one or more different directions. For example, vision sensors 701 may be affixed to the front, sides, rear, and/or roof, etc. of the vehicle in forward-facing, rear-facing, side-facing, etc. directions. In some embodiments, vision sensors 701 are image sensors such as high dynamic range cameras. For example, a high dynamic range forward-facing camera captures image data in front of the vehicle. In some embodiments, a vehicle is affixed with multiple sensors for capturing data. For example, in some embodiments, eight surround cameras are affixed to a vehicle and provide 360 degrees of visibility around the vehicle with a range of up to 250 meters. In some embodiments, camera sensors include a wide forward camera, a narrow forward camera, a rear view camera, forward looking side cameras, and/or rearward looking side cameras. The various camera sensors are used to capture the environment surrounding the vehicle and the captured image is provided for deep learning analysis.

In some examples not corresponding to the wording of the claims, vision sensors 701 are not mounted to the vehicle of onboard components 700. For example, vision sensors 701 may be mounted on neighboring vehicles and/or affixed to the road or environment and are included as part of a deep learning system for capturing sensor data. In some embodiments, vision sensors 701 include one or more cameras that capture the road surface the vehicle is traveling on. For example, one or more front-facing and/or pillar cameras capture lane markings of the lane the vehicle is traveling in. Vision sensors 701 may include both image sensors capable of capturing still images and/or video. The data may be captured over a period of time, such as a sequence of captured data over a period of time.

In some embodiments, perception module 703 is used to analyze sensor data to generate a representation of the environment surrounding the vehicle. In some embodiments, perception module 703 utilizes a trained machine learning network for generating an occupancy grid. Perception module 703 may utilize a deep learning network to take as input sensor data including data from vision sensors 701 and/or additional sensors 709. The deep learning network of perception module 703 may be an artificial neural network such as a convolutional neural network (CNN) that is trained on input such as sensor data and its output is provided to path planner module 705. As one example, the output may include drivable space of the environment surrounding the vehicle. In some embodiments, perception module 703 receives as input at least sensor data. Additional input may include scene data describing the environment around the vehicle and/or vehicle specifications such as operating characteristics of the vehicle. Scene data may include scene tags describing the environment around the vehicle, such as raining, wet roads, snowing, muddy, high density traffic, highway, urban, school zone, etc. In some embodiments, perception module 703 is utilized at 103 of Figure 1, 305 and/or 309 of Figure 3, 411 of Figure 4, and/or the process of Figure 5.

In some embodiments, path planner module 705 is a path planning component for selecting an optimal path to navigate a vehicle from one location to another. The path planning component may utilize an occupancy grid and a cost function for selecting an optimal route. In some embodiments, potential paths are made up of one or more path primitives, such as arc primitives, that model the operating characteristics of the vehicle. In some embodiments, path planner module 705 is utilized at step 103 of Figure 1 and/or step 309 of Figure 3. In various embodiments, path planner module 705 runs at a slower frequency or is updated less often than other components such as perception module 703 and vehicle controller 707.

In some embodiments, vehicle controller 707 is utilized to process the output of path planner module 705 and to translate a selected path into vehicle control operations or commands. In some embodiments, vehicle controller 707 is utilized to control the vehicle for automatic navigation to a selected destination target. In various embodiments, vehicle controller 707 can adjust the speed, acceleration, steering, braking, etc. of the vehicle by transmitting commends to vehicle actuators 713. For example, in some embodiments, vehicle controller 707 is used to control the vehicle to maintain the vehicle's position along a path from its current location to a selected destination.

In some embodiments, vehicle controller 707 is used to control vehicle lighting such as brake lights, turns signals, headlights, etc. In some embodiments, vehicle controller 707 is used to control vehicle audio conditions such as the vehicle's sound system, playing audio alerts, enabling a microphone, enabling the horn, etc. In some embodiments, vehicle controller 707 is used to control notification systems including warning systems to inform the driver and/or passengers of driving events such as a potential collision or the approach of an intended destination. In some embodiments, vehicle controller 707 is used to adjust sensors such as sensors 701 of a vehicle. For example, vehicle controller 707 may be used to change parameters of one or more sensors such as modifying the orientation, changing the output resolution and/or format type, increasing or decreasing the capture rate, adjusting the captured dynamic range, adjusting the focus of a camera, enabling and/or disabling a sensor, etc.

In some embodiments, additional sensors 709 include one or more sensors in addition to vision sensors 701. In various embodiments, additional sensors 709 may be affixed to a vehicle, at different locations of the vehicle, and/or oriented in one or more different directions. For example, additional sensors 709 may be affixed to the front, sides, rear, and/or roof, etc. of the vehicle in forward-facing, rear-facing, side-facing, etc. directions. In some embodiments, additional sensors 709 include radar, audio, LiDAR, inertia, odometry, location, and/or ultrasonic sensors, among others. The ultrasonic and/or radar sensors may be used to capture surrounding details. For example, twelve ultrasonic sensors may be affixed to the vehicle to detect both hard and soft objects. In some embodiments, a forward-facing radar is utilized to capture data of the surrounding environment. In various embodiments, radar sensors are able to capture surrounding detail despite heavy rain, fog, dust, and other vehicles. The various sensors are used to capture the environment surrounding the vehicle and the captured image is provided for deep learning analysis.

In some embodiments, additional sensors 709 are not mounted to the vehicle of onboard components 700. For example, additional sensors 709 may be mounted on neighboring vehicles and/or affixed to the road or environment and are included as part of an autonomous vehicle system for capturing sensor data. In some embodiments, additional sensors 709 include one or more non-vision sensors that capture the road surface the vehicle is traveling on. In some embodiments, additional sensors 709 include location sensors such as global position system (GPS) sensors for determining the vehicle's location and/or change in location.

In some embodiments, safety controller 711 is a safety component used to implement safety checks for onboard components 700. In some embodiments, safety controller 711 receives sensor input from vision sensors 701 and/or additional sensors 709. In the event an object is detected and/or a collision is highly likely, safety controller 711 can inform different components of an immediate pending safety issue. In some embodiments, safety controller 711 is capable of interrupting and/or augmenting the results of perception module 703, vehicle controller 707, and/or vehicle actuators 713. In some embodiments, safety controller 711 is used to determine how to respond to a detected safety concern. For example, at slow speeds, a vehicle can be brought to an immediate stop but at high speeds the vehicle must be safely slowed down and parked in a safe location. In various embodiments, safety controller 711 communicates with remote interface component 751 to detect whether a live connection is established between onboard components 700 and the user of remote interface component 751. For example, safety controller 711 can monitor for a virtual heartbeat from remote interface component 751 and in the event a virtual heartbeat is no longer detected, a safety alert can be triggered to terminate or modify automatic navigation. In some embodiments, the process of Figure 6 is at least in part implemented by safety controller 711.

In some embodiments, vehicle actuator 713 is used to implement specific operating controls of the vehicle. For example, vehicle actuator 713 initiates changes in the speed and/or steering of the vehicle. In some embodiments, vehicle actuator 713 sends operating commands to a drive inverter and/or steering rack. In various embodiments, vehicle actuator 713 implements a safety check based on input from additional sensors 709 and/or safety controller 711 in the event a potential collision is detected. For example, vehicle actuator 713 brings the vehicle to an immediate stop.

In some embodiments, network interface 715 is a communication interface for sending and/or receiving data including voice data. In various embodiments, a network interface 715 includes a cellular or wireless interface for interfacing with remote servers, to connect and make voice calls, to send and/or receive text messages, to transmit sensor data, to receive updates to a perception module including updated machine learning models, to retrieve environmental conditions including weather conditions and forecasts, traffic conditions, traffic rules and regulations, etc. For example, network interface 715 may be used to receive an update for the instructions and/or operating parameters for sensors 701, perception module 703, path planner module 705, vehicle controller 707, additional sensors 709, safety controller 711, and/or vehicle actuators 713. A machine learning model of perception module 703 may be updated using network interface 715. As another example, network interface 715 may be used to update firmware of vision sensors 701 and/or operating goals of path planner module 705 such as weighted costs. As yet another example, network interface 715 may be used to transmit occupancy grid data to navigation server 761 for sharing with other vehicles.

In some embodiments, remote interface component 751 is one or more remote components that may be used remotely from the vehicle to automatically navigate the vehicle. For example, remote interface component 751 includes a smartphone application running on a smartphone device, a key fob, a GUI such as a website to control the vehicle, and/or another remote interface component. A user can initiate a summon functionality to automatically navigate a vehicle to a selected destination target specified by a geographical location. For example, a user can have a vehicle find and then follow the user. As another example, the user can specify a parking location using remote interface component 751 and the vehicle will automatically navigate to the specified location or to the closest location to the specified location that is safe to reach.

In some embodiments, navigation server 761 is an optional remote server and includes remote storage. Navigation server 761 can store occupancy grids and/or occupancy data that can be used at a later time to initialize a newly generated occupancy grid. In some embodiments, navigation server 761 is used to synchronize occupancy data across different vehicles. For example, vehicles in the area with fresh occupancy data can be initiated or updated with occupancy data generated from other vehicles. In various embodiments, navigation server 761 can communicate with onboard components 700 via network interface 715. In some embodiments, navigation server 761 can communicate with remote interface component 751. In some embodiments, one or more components or partial components of onboard components 700 are implemented on navigation server 761. For example, navigation server 761 can perform processing such as perception processing and/or path planning and provide the needed results to the onboard components 700.

Figure 8 is a diagram illustrating an embodiment of a user interface for automatically navigating a vehicle to a destination target. In some embodiments, the user interface of Figure 8 is used to initiate and/or monitor the processes of Figures 1-6. In some embodiments, the user interface of Figure 8 is the user interface of a smartphone application and/or is remote interface component 751 of Figure 7. In some embodiments, the functionality associated with Figure 8 is initiated at 203 of Figure 2 to navigate a vehicle to the location of a user. For example, a user interacting with the user interface on a smartphone device activates a "Find Me" action to navigate a vehicle to the location of the user's smartphone device, which accurately approximates the user's location. In the example shown, user interface 800 includes user interface components map 801, dialog window 803, vehicle locator element 805, user locator element 809, and valid summon area element 807.

In some embodiments, user interface 800 displays map 801 with the vehicle's location indicated at vehicle locator element 805 and the user's location indicated at user locator element 809. The areas that the vehicle is available to traverse when automatically navigating to the user is indicated by valid summon area element 807. In various embodiments, valid summon area element 807 is a circle that displays the maximum distance the vehicle is allowed to travel. In some embodiments, valid summon area element 807 takes into account the line of sight from the user to the vehicle and only areas with a line of sight are allowed for automatic navigation.

In the example shown, map 801 is a satellite map although alternative maps may be used. In some embodiments, map 801 may be manipulated to view different locations, for example, by panning or zooming map 801. In various embodiments, map 801 includes a three-dimensional view (not shown) to allow the user to select different altitudes, such as different levels in a parking garage. For example, areas with drivable areas at different altitudes are highlighted and can be viewed in an exploded view.

In some embodiments, vehicle locator element 805 displays both the location and orientation (or heading) of the vehicle. For example, the direction the vehicle is facing is indicated by the direction the arrow of the vehicle locator element 805 is pointing. User locator element 809 indicates the user's location. In some embodiments, the locations of other potential passengers are also displayed, for example, in another color (not shown). In some embodiments, map 801 is centered on vehicle locator element 805. In various embodiments, other data may be used as the center of map 801, such as the original (or starting) location of the vehicle, the user's current location, the closest reachable location to the user's current location, etc.

In the example shown, dialog window 803 includes a text description such as "Press and hold to start, or tap the map to choose a destination" to inform the user how to activate the summon feature. In some embodiments, the default action is to navigate the vehicle to the user. The default action is activated by selecting the "Find Me" button that is part of dialog window 803. In some embodiments, once the "Find Me" action is enabled, the selected path is displayed on the user interface (not shown in Figure 8). As the vehicle navigates to the user's location, vehicle locator element 805 is updated to reflect the vehicle's new location. Similarly, as a user moves, user locator element 809 is updated to reflect the user's new location. In some embodiments, a trail shows the change in the user's location. In various embodiments, the user must keep contact with a virtual heartbeat button to allow the automatic navigation to continue. Once the user releases the virtual heartbeat button, the automatic navigation will stop. In some embodiments, the heartbeat button is the "Find Me" button of dialog window 803. In some embodiments, separate forward and reverse buttons function as virtual heartbeat buttons to confirm automatic navigation in forward and reverse directions, respectively (not shown).

In some embodiments, an additional "Find" functionality (not shown) can automatically navigate the vehicle to a selected person's location, for example, to pick up a passenger that is distinct from the user. In various embodiments, pre-identified locations are available to be displayed (not shown) that can be selected as destination targets. For example, locations may be pre-identified as valid parking or waiting locations for picking up passengers.

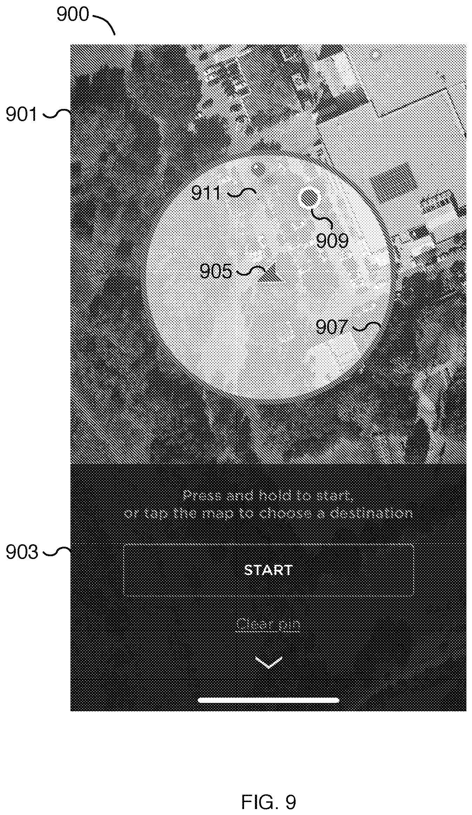

Figure 9 is a diagram illustrating an embodiment of a user interface for automatically navigating a vehicle to a destination target. In some embodiments, the user interface of Figure 9 is used to initiate and/or monitor the processes of Figures 1-6. In some embodiments, the user interface of Figure 9 is the user interface of a smartphone application and/or is remote interface component 751 of Figure 7. In some embodiments, the functionality associated with Figure 9 is initiated at 201 of Figure 2 to navigate a vehicle to a location specified by the user. For example, a user interacting with the user interface on a smartphone device drops a pin to specify a destination target for the vehicle to navigate to. In the example shown, user interface 900 includes user interface components map 901, dialog window 903, vehicle locator element 905, user locator element 909, valid summon area element 907, and destination target element 911.

In some embodiments, user interface 900 displays map 901 with the vehicle's location indicated at vehicle locator element 905 and the user's location indicated at user locator element 909. The areas that the vehicle is available to traverse when automatically navigating to the user is indicated by valid summon area element 907. In various embodiments, valid summon area element 907 is a circle that displays the maximum distance the vehicle is allowed to travel and a user may only select a destination target within valid summon area element 907. In some embodiments, valid summon area element 907 takes into account the line of sight from the user to the vehicle and only areas with a line of sight are allowed for automatic navigation.

In the example shown, map 901 is a satellite map although alternative maps may be used. In some embodiments, map 901 may be manipulated to view different locations, for example, by panning or zooming map 901. In various embodiments, map 901 includes a three-dimensional view (not shown) to allow the user to select different altitudes, such as different levels in a parking garage. For example, areas with drivable areas at different altitudes are highlighted and can be viewed in an exploded view for selecting a destination target.

In some embodiments, vehicle locator element 905 displays both the location and orientation (or heading) of the vehicle. For example, the direction the vehicle is facing is indicated by the direction the arrow of the vehicle locator element 905 is pointing. User locator element 909 indicates the user's location. In some embodiments, the locations of other potential passengers are also displayed, for example, in another color (not shown). In some embodiments, map 901 is centered on vehicle locator element 905. In various embodiments, other data may be used as the center of map 901, such as the original (or starting) location of the vehicle, the user's current location, the closest reachable location to the user's current location, the selected destination target represented by destination target element 911, etc.

In the example shown, dialog window 903 includes a text description such as "Press and hold to start, or tap the map to choose a destination" to inform the user how to activate the summon feature. The user can select a target destination by selecting on map 901 a location within valid summon area element 907. Destination target element 911 is displayed on the valid selected location. In the example shown, a pin icon is used for destination target element 911. In some embodiments, an icon with an orientation (not shown), such as an arrow or a vehicle icon, is used as destination target element 911. The icon of destination target element 911 can be manipulated to select a final destination orientation. In various embodiments, the orientation selected is validated to confirm that the orientation is valid. For example, a destination orientation facing against traffic may not be allowed on a one-way street. To clear the selected location associated with destination target element 911, the user can select the "clear pin" dialog of dialog window 903. To initiate automatic navigation, the user selects the "Start" button of dialog window 903. In some embodiments, once the automatic navigation is enabled, the selected path is displayed on the user interface (not shown in Figure 9). As the vehicle navigates to the destination target location, vehicle locator element 905 is updated to reflect the vehicle's new location. Similarly, as a user moves, user locator element 909 is updated to reflect the user's new location. In some embodiments, a trail shows the change in the user's location. In various embodiments, the user must keep contact with a virtual heartbeat button to allow the automatic navigation to continue. Once the user releases the virtual heartbeat button, the automatic navigation will stop. In some embodiments, the heartbeat button is the "Start" button of dialog window 903. In some embodiments, separate forward and reverse buttons function as virtual heartbeat buttons to confirm automatic navigation in forward and reverse directions, respectively (not shown).

## Claims

1. A system, comprising:
a processor and a memory coupled to the processor and configured to provide the processor with instructions which, when executed, cause the processor to:
receive (301) an identification of a geographical location associated with a target specified by a user remote from a vehicle, wherein the target is specified on a map;
receive (303) image data from one or more camera sensors covering an environment surrounding the vehicle, the one or more camera sensors being affixed to the vehicle;
utilize a machine learning model to generate a representation of at least a portion of an environment surrounding the vehicle using the image data from the one or more camera sensors affixed to the vehicle and additional sensor data from one or more additional sensors of the vehicle by determining (305; 409) a drivable space including areas of the environment surrounding the vehicle drivable by the vehicle; and
use said drivable space to generate (307; 411) an occupancy grid containing, at each grid location corresponding to a location in the environment surrounding the vehicle, a drivability value, wherein the drivability value at each location is a probability that the location is drivable, wherein each location of the grid includes a cost metric associated with a cost of traversing through that location, wherein a cost value of each grid location is based on the corresponding drivability value;
calculate (309) a selected path to a target location corresponding to the received geographical location using the generated representation of the at least portion of the environment surrounding the vehicle by: determining a plurality of potential paths to the target location and selecting the potential path with optimal cost value as the selected path to the target location, wherein a cost value of each potential path is determined based on cost values of a set of grid locations of the occupancy grid traversed by the corresponding potential path; and
provide (311) at least one command to automatically navigate the vehicle based on the selected path and updated image data from at least a portion of the one or more camera sensors of the vehicle.

2. The system of claim 1, wherein the target specified by the user is a dynamically updated current location of a mobile device of the user.

3. The system of claims 1-2, wherein the geographical location is based on a global positioning system location detected by a mobile device of the user.

4. The system of claim 1, wherein the target specified by the user indicates a target orientation of the vehicle.

5. The system of claim 1, wherein the target is within a limited geographical region within a threshold distance from a detected location of a device utilized by the user to specify the target.

6. The system of claims 1-5, wherein the automatic navigation of the vehicle is paused in response to a detection of an obstacle using an ultrasonic sensor.

7. The system of claims 1-6, wherein a speed of the vehicle during the automatic navigation is limited to be equal or less than a specified limit.

8. The system of claims 1-7, wherein the target location is dynamically updated based on a periodically updated geographical location of a device of the user.

9. The system of claims 1-8, wherein the one or more additional sensors comprise one or more of the following: an ultrasonic sensor or a radar sensor.

10. The system of claims 1-9, wherein the processor is further configured to receive a specified target time associated with the target specified by the user.

11. The system of claims 1-10, wherein the representation of the at least portion of the environment surrounding the vehicle includes a three-dimensional representation of the portion of the environment.

12. A method, comprising:
receiving (301) an identification of a geographical location associated with a target specified on a map by a user remote from a vehicle;
receiving (303) image data from one or more camera sensors covering an environment surrounding the vehicle, the one or more camera sensors being affixed to the vehicle;
utilizing a machine learning model to generate a representation of at least a portion of an environment surrounding the vehicle using the image data from the one or more camera sensors affixed to the vehicle and additional sensor data from one or more additional sensors of the vehicle by determining (305; 409) a drivable space including areas of the environment surrounding the vehicle drivable by the vehicle;
using said drivable space to generate (307; 411) an occupancy grid containing, at each grid location corresponding to a location in the environment surrounding the vehicle, a drivability value, wherein the drivability value at each location is a probability that the location is drivable, wherein each location of the grid includes a cost metric associated with a cost of traversing through that location, wherein a cost value of each grid location is based on the corresponding drivability value;
calculating (309) a selected path to a target location corresponding to the received geographical location using the generated representation of the at least portion of the environment surrounding the vehicle by: determining a plurality of potential paths to the target location and selecting the potential path with optimal cost value as the selected path to the target location, wherein a cost value of each potential path is determined based on cost values of a set of grid locations of the occupancy grid traversed by the corresponding potential path; and
providing (311) at least one command to automatically navigate the vehicle based on the selected path and updated image data from at least a portion of the one or more camera sensors of the vehicle.

13. A computer program product, the computer program product being embodied in a non-transitory computer readable storage medium and comprising computer instructions for:
Receiving (301) an identification of a geographical location associated with a target specified on a map by a user remote from a vehicle;
receiving (303) image data from one or more camera sensors covering an environment surrounding the vehicle, the one or more camera sensors being affixed to the vehicle;
utilizing a machine learning model to generate a representation of at least a portion of an environment surrounding the vehicle using the image data from the one or more camera sensors affixed to the vehicle and additional sensor data from one or more additional sensors of the vehicle by determining (305) a drivable space including areas of the environment surrounding the vehicle drivable by the vehicle;
using said drivable space to generate (307; 411) an occupancy grid containing, at each grid location corresponding to a location in the environment surrounding the vehicle, a drivability value, wherein the drivability value at each location is a probability that the location is drivable, wherein each location of the grid includes a cost metric associated with a cost of traversing through that location, wherein the cost value at each grid location is based on the corresponding drivability value;
calculating (309) a selected path to a target location corresponding to the received geographical location using the generated representation of the at least portion of the environment surrounding the vehicle by: determining a plurality of potential paths to the target location and selecting the potential path with optimal cost value as the selected path to the target location, wherein a cost value of each potential path is determined based on cost values of a set of grid locations of the occupancy grid traversed by the corresponding potential path; and
providing (311) at least one command to automatically navigate the vehicle based on the selected path and updated image data from at least a portion of the one or more camera sensors of the vehicle.

## Patentansprüche

1. System, das Folgendes aufweist:
einen Prozessor und einen Speicher, der mit dem Prozessor gekoppelt und dazu konfiguriert ist, dem Prozessor Anweisungen bereitzustellen, die bei Ausführung den Prozessor zu Folgendem veranlassen:
Empfangen (301) einer Identifikation eines geografischen Standorts, der einem Ziel zugeordnet ist, das von einem Benutzer, der sich entfernt von einem Fahrzeug befindet, spezifiziert wurde, wobei das Ziel auf einer Karte spezifiziert ist;
Empfangen (303) von Bilddaten von einem oder mehreren Kamerasensoren, die eine Umgebung rund um das Fahrzeug abdecken, wobei der eine oder die mehreren Kamerasensoren am Fahrzeug angebracht sind;
Nutzen eines maschinellen Lernmodells, um unter Verwendung der Bilddaten von dem einen oder den mehreren am Fahrzeug angebrachten Kamerasensoren und zusätzlicher Sensordaten von einem oder mehreren zusätzlichen Sensoren des Fahrzeugs eine Darstellung mindestens eines Teils einer Umgebung rund um das Fahrzeug zu erzeugen, indem ein befahrbarer Raum bestimmt wird (305; 409), der Bereiche der Umgebung rund um das Fahrzeug enthält, die vom Fahrzeug befahren werden können; und
Verwenden des befahrbaren Raums, um ein Belegungsgitter zu erzeugen (307; 411), das an jeder Gitterposition, die einem Standort in der Umgebung rund um das Fahrzeug entspricht, einen Befahrbarkeitswert enthält, wobei der Befahrbarkeitswert an jedem Standort eine Wahrscheinlichkeit ist, dass der Standort befahrbar ist, wobei jeder Standort des Gitters eine Kostenmetrik enthält, die den Kosten für das Durchqueren dieses Standorts zugeordnet ist, wobei ein Kostenfaktor jeder Gitterposition auf dem entsprechenden Befahrbarkeitswert basiert;
Berechnen (309) eines ausgewählten Wegs zu einem Zielstandort, der dem empfangenen geografischen Standort entspricht, unter Verwendung der erzeugten Darstellung des mindestens einen Teils der Umgebung rund um das Fahrzeug, indem eine Mehrzahl von potenziellen Wegen zum Zielstandort bestimmt wird und der potenzielle Weg mit dem optimalen Kostenfaktor als ausgewählter Weg zum Zielstandort ausgewählt wird, wobei ein Kostenfaktor jedes potenziellen Wegs basierend auf Kostenfaktoren eines Satzes von Gitterpositionen des Belegungsgitters bestimmt wird, die von dem entsprechenden potenziellen Weg durchquert werden; und
Bereitstellen (311) mindestens eines Befehls, um das Fahrzeug basierend auf dem ausgewählten Weg und aktualisierten Bilddaten von mindestens einem Teil des einen oder der mehreren Kamerasensoren des Fahrzeugs automatisch zu navigieren.

2. System nach Anspruch 1, wobei das vom Benutzer spezifizierte Ziel ein dynamisch aktualisierter aktueller Standort einer mobilen Vorrichtung des Benutzers ist.

3. System nach den Ansprüchen 1-2, wobei der geografische Standort auf einem Standort eines globalen Positionierungssystems basiert, der von einer mobilen Vorrichtung des Benutzers detektiert wurde.

4. System nach Anspruch 1, wobei das vom Benutzer spezifizierte Ziel eine Zielausrichtung des Fahrzeugs angibt.

5. System nach Anspruch 1, wobei das Ziel innerhalb einer begrenzten geografischen Region innerhalb eines Schwellenabstands von einem detektierten Standort einer Vorrichtung liegt, die vom Benutzer genutzt wird, um das Ziel zu spezifizieren.

6. System nach den Ansprüchen 1-5, wobei die automatische Navigation des Fahrzeugs als Reaktion auf eine Detektion eines Hindernisses unter Verwendung eines Ultraschallsensors pausiert wird.

7. System nach den Ansprüchen 1-6, wobei die Geschwindigkeit des Fahrzeugs während der automatischen Navigation so begrenzt wird, dass sie gleich oder kleiner als ein spezifizierter Grenzwert ist.

8. System nach den Ansprüchen 1-7, wobei der Zielstandort basierend auf einem periodisch aktualisierten geografischen Standort einer Vorrichtung des Benutzers dynamisch aktualisiert wird.

9. System nach den Ansprüchen 1-8, wobei der eine oder die mehreren zusätzlichen Sensoren einen oder mehrere von Folgendem umfassen: einen Ultraschallsensor oder einen Radarsensor.

10. System nach den Ansprüchen 1-9, wobei der Prozessor ferner dazu konfiguriert ist, eine spezifizierte Zielzeit zu empfangen, die dem vom Benutzer spezifizierten Ziel zugeordnet ist.

11. System nach den Ansprüchen 1-10, wobei die Darstellung des mindestens einen Teils der Umgebung rund um das Fahrzeug eine dreidimensionale Darstellung des Teils der Umgebung enthält.

12. Verfahren, das Folgendes umfasst:
Empfangen (301) einer Identifikation eines geografischen Standorts, der einem Ziel zugeordnet ist, das von einem Benutzer, der sich entfernt von einem Fahrzeug befindet, auf einer Karte spezifiziert wurde;
Empfangen (303) von Bilddaten von einem oder mehreren Kamerasensoren, die eine Umgebung rund um das Fahrzeug abdecken, wobei der eine oder die mehreren Kamerasensoren am Fahrzeug angebracht sind;
Nutzen eines maschinellen Lernmodells, um unter Verwendung der Bilddaten von dem einen oder den mehreren am Fahrzeug angebrachten Kamerasensoren und zusätzlicher Sensordaten von einem oder mehreren zusätzlichen Sensoren des Fahrzeugs eine Darstellung mindestens eines Teils einer Umgebung rund um das Fahrzeug zu erzeugen, indem ein befahrbarer Raum bestimmt wird (305; 409), der Bereiche der Umgebung rund um das Fahrzeug enthält, die vom Fahrzeug befahren werden können;
Verwenden des befahrbaren Raums, um ein Belegungsgitter zu erzeugen (307; 411), das an jeder Gitterposition, die einem Standort in der Umgebung rund um das Fahrzeug entspricht, einen Befahrbarkeitswert enthält, wobei der Befahrbarkeitswert an jedem Standort eine Wahrscheinlichkeit ist, dass der Standort befahrbar ist, wobei jeder Standort des Gitters eine Kostenmetrik enthält, die den Kosten für das Durchqueren dieses Standorts zugeordnet ist, wobei ein Kostenfaktor jeder Gitterposition auf dem entsprechenden Befahrbarkeitswert basiert;
Berechnen (309) eines ausgewählten Wegs zu einem Zielstandort, der dem empfangenen geografischen Standort entspricht, unter Verwendung der erzeugten Darstellung des mindestens einen Teils der Umgebung rund um das Fahrzeug, indem eine Mehrzahl von potenziellen Wegen zum Zielstandort bestimmt wird und der potenzielle Weg mit dem optimalen Kostenfaktor als ausgewählter Weg zum Zielstandort ausgewählt wird, wobei ein Kostenfaktor jedes potenziellen Wegs basierend auf Kostenfaktoren eines Satzes von Gitterpositionen des Belegungsgitters bestimmt wird, die von dem entsprechenden potenziellen Weg durchquert werden; und
Bereitstellen (311) mindestens eines Befehls, um das Fahrzeug basierend auf dem ausgewählten Weg und aktualisierten Bilddaten von mindestens einem Teil des einen oder der mehreren Kamerasensoren des Fahrzeugs automatisch zu navigieren.

13. Computerprogrammprodukt, wobei das Computerprogrammprodukt auf einem nichtflüchtigen, computerlesbaren Speichermedium verkörpert ist und Computeranweisungen für Folgendes umfasst:
Empfangen (301) einer Identifikation eines geografischen Standorts, der einem Ziel zugeordnet ist, das von einem Benutzer, der sich entfernt von einem Fahrzeug befindet, auf einer Karte spezifiziert wurde;
Empfangen (303) von Bilddaten von einem oder mehreren Kamerasensoren, die eine Umgebung rund um das Fahrzeug abdecken, wobei der eine oder die mehreren Kamerasensoren am Fahrzeug angebracht sind;
Nutzen eines maschinellen Lernmodells, um unter Verwendung der Bilddaten von dem einen oder den mehreren am Fahrzeug angebrachten Kamerasensoren und zusätzlicher Sensordaten von einem oder mehreren zusätzlichen Sensoren des Fahrzeugs eine Darstellung mindestens eines Teils einer Umgebung rund um das Fahrzeug zu erzeugen, indem ein befahrbarer Raum bestimmt wird (305), der Bereiche der Umgebung rund um das Fahrzeug enthält, die vom Fahrzeug befahren werden können;
Verwenden des befahrbaren Raums, um ein Belegungsgitter zu erzeugen (307; 411), das an jeder Gitterposition, die einem Standort in der Umgebung rund um das Fahrzeug entspricht, einen Befahrbarkeitswert enthält, wobei der Befahrbarkeitswert an jedem Standort eine Wahrscheinlichkeit ist, dass der Standort befahrbar ist, wobei jeder Standort des Gitters eine Kostenmetrik enthält, die den Kosten für das Durchqueren dieses Standorts zugeordnet ist, wobei ein Kostenfaktor jeder Gitterposition auf dem entsprechenden Befahrbarkeitswert basiert;
Berechnen (309) eines ausgewählten Wegs zu einem Zielstandort, der dem empfangenen geografischen Standort entspricht, unter Verwendung der erzeugten Darstellung des mindestens einen Teils der Umgebung rund um das Fahrzeug, indem eine Mehrzahl von potenziellen Wegen zum Zielstandort bestimmt wird und der potenzielle Weg mit dem optimalen Kostenfaktor als ausgewählter Weg zum Zielstandort ausgewählt wird, wobei ein Kostenfaktor jedes potenziellen Wegs basierend auf Kostenfaktoren eines Satzes von Gitterpositionen des Belegungsgitters bestimmt wird, die von dem entsprechenden potenziellen Weg durchquert werden; und
Bereitstellen (311) mindestens eines Befehls, um das Fahrzeug basierend auf dem ausgewählten Weg und aktualisierten Bilddaten von mindestens einem Teil des einen oder der mehreren Kamerasensoren des Fahrzeugs automatisch zu navigieren.

## Revendications

1. Un système, comprenant : un processeur et une mémoire couplée au processeur et configurée pour fournir au processeur des instructions qui, lorsqu'elles sont exécutées, amènent le processeur à : recevoir (301) une identification d'une position géographique associée à une cible spécifiée par un utilisateur distant d'un véhicule, la cible étant spécifiée sur une carte ; recevoir (303) des données d'image provenant d'un ou plusieurs capteurs de caméra couvrant un environnement entourant le véhicule, le ou les capteurs de caméra étant fixés au véhicule ; utiliser un modèle d'apprentissage automatique pour générer une représentation d'au moins une partie d'un environnement entourant le véhicule à l'aide des données d'image provenant du ou des capteurs de caméra fixés au véhicule et de données de capteur supplémentaires provenant d'un ou plusieurs capteurs supplémentaires du véhicule en déterminant (305 ; 409) un espace praticable comprenant des zones de l'environnement entourant le véhicule praticables par le véhicule ; et utiliser ledit espace praticable pour générer (307 ; 411) une grille d'occupation contenant, à chaque emplacement de grille correspondant à un emplacement dans l'environnement entourant le véhicule, une valeur de praticabilité, la valeur de praticabilité à chaque emplacement étant une probabilité que l'emplacement soit praticable, chaque emplacement de la grille comprenant une métrique de coût associée à un coût de traversée de cet emplacement, une valeur de coût de chaque emplacement de grille étant basée sur la valeur de praticabilité correspondante ; calculer (309) une trajectoire sélectionnée vers une position cible correspondant à la position géographique reçue à l'aide de la représentation générée d'au moins une partie de l'environnement entourant le véhicule en :
déterminant une pluralité de trajectoires potentielles vers la position cible et en sélectionnant la trajectoire potentielle ayant la valeur de coût optimale comme trajectoire sélectionnée vers la position cible, une valeur de coût de chaque trajectoire potentielle étant déterminée sur la base des valeurs de coût d'un ensemble d'emplacements de grille de la grille d'occupation traversés par la trajectoire potentielle correspondante ; et
fournir (311) au moins une commande pour naviguer automatiquement le véhicule sur la base de la trajectoire sélectionnée et de données d'image mises à jour provenant d'au moins une partie du ou des capteurs de caméra du véhicule.

2. Le système selon la revendication 1, dans lequel la cible spécifiée par l'utilisateur est une position actuelle mise à jour dynamiquement d'un dispositif mobile de l'utilisateur.

3. Le système selon l'une quelconque des revendications 1 à 2, dans lequel la position géographique est basée sur une position de système de positionnement global détectée par un dispositif mobile de l'utilisateur.

4. Le système selon la revendication 1, dans lequel la cible spécifiée par l'utilisateur indique une orientation cible du véhicule.

5. Le système selon la revendication 1, dans lequel la cible se trouve dans une région géographique limitée à l'intérieur d'une distance seuil à partir d'une position détectée d'un dispositif utilisé par l'utilisateur pour spécifier la cible.

6. Le système selon l'une quelconque des revendications 1 à 5, dans lequel la navigation automatique du véhicule est mise en pause en réponse à une détection d'un obstacle à l'aide d'un capteur ultrasonique.

7. Le système selon l'une quelconque des revendications 1 à 6, dans lequel une vitesse du véhicule pendant la navigation automatique est limitée à être égale ou inférieure à une limite spécifiée.

8. Le système selon l'une quelconque des revendications 1 à 7, dans lequel la position cible est mise à jour dynamiquement sur la base d'une position géographique mise à jour périodiquement d'un dispositif de l'utilisateur.

9. Le système selon l'une quelconque des revendications 1 à 8, dans lequel le ou les capteurs supplémentaires comprennent un ou plusieurs des éléments suivants : un capteur ultrasonique ou un capteur radar.

10. Le système selon l'une quelconque des revendications 1 à 9, dans lequel le processeur est en outre configuré pour recevoir un temps cible spécifié associé à la cible spécifiée par l'utilisateur.

11. Le système selon l'une quelconque des revendications 1 à 10, dans lequel la représentation d'au moins une partie de l'environnement entourant le véhicule comprend une représentation tridimensionnelle de la partie de l'environnement.

12. Un procédé, comprenant :
recevoir (301) une identification d'une position géographique associée à une cible spécifiée sur une carte par un utilisateur distant d'un véhicule ;
recevoir (303) des données d'image provenant d'un ou plusieurs capteurs de caméra couvrant un environnement entourant le véhicule, le ou les capteurs de caméra étant fixés au véhicule ;
utiliser un modèle d'apprentissage automatique pour générer une représentation d'au moins une partie d'un environnement entourant le véhicule à l'aide des données d'image provenant du ou des capteurs de caméra fixés au véhicule et de données de capteur supplémentaires provenant d'un ou plusieurs capteurs supplémentaires du véhicule en déterminant (305 ; 409) un espace praticable comprenant des zones de l'environnement entourant le véhicule praticables par le véhicule ;
utiliser ledit espace praticable pour générer (307 ; 411) une grille d'occupation contenant, à chaque emplacement de grille correspondant à un emplacement dans l'environnement entourant le véhicule, une valeur de praticabilité, la valeur de praticabilité à chaque emplacement étant une probabilité que l'emplacement soit praticable, chaque emplacement de la grille comprenant une métrique de coût associée à un coût de traversée de cet emplacement, une valeur de coût de chaque emplacement de grille étant basée sur la valeur de praticabilité correspondante ;
calculer (309) une trajectoire sélectionnée vers une position cible correspondant à la position géographique reçue à l'aide de la représentation générée d'au moins une partie de l'environnement entourant le véhicule en : déterminant une pluralité de trajectoires potentielles vers la position cible et en sélectionnant la trajectoire potentielle ayant la valeur de coût optimale comme trajectoire sélectionnée vers la position cible, une valeur de coût de chaque trajectoire potentielle étant déterminée sur la base des valeurs de coût d'un ensemble d'emplacements de grille de la grille d'occupation traversés par la trajectoire potentielle correspondante ; et
fournir (311) au moins une commande pour naviguer automatiquement le véhicule sur la base de la trajectoire sélectionnée et de données d'image mises à jour provenant d'au moins une partie du ou des capteurs de caméra du véhicule.

13. Un produit programme d'ordinateur, le produit programme d'ordinateur étant incorporé dans un support de stockage lisible par ordinateur non transitoire et comprenant des instructions d'ordinateur pour : recevoir (301) une identification d'une position géographique associée à une cible spécifiée sur une carte par un utilisateur distant d'un véhicule ;
recevoir (303) des données d'image provenant d'un ou plusieurs capteurs de caméra couvrant un environnement entourant le véhicule, le ou les capteurs de caméra étant fixés au véhicule ; utiliser un modèle d'apprentissage automatique pour générer une représentation d'au moins une partie d'un environnement entourant le véhicule à l'aide des données d'image provenant du ou des capteurs de caméra fixés au véhicule et de données de capteur supplémentaires provenant d'un ou plusieurs capteurs supplémentaires du véhicule en déterminant (305) un espace praticable comprenant des zones de l'environnement entourant le véhicule praticables par le véhicule ;
utiliser ledit espace praticable pour générer (307 ; 411) une grille d'occupation contenant, à chaque emplacement de grille correspondant à un emplacement dans l'environnement entourant le véhicule, une valeur de praticabilité, la valeur de praticabilité à chaque emplacement étant une probabilité que l'emplacement soit praticable, chaque emplacement de la grille comprenant une métrique de coût associée à un coût de traversée de cet emplacement, la valeur de coût à chaque emplacement de grille étant basée sur la valeur de praticabilité correspondante ;
calculer (309) une trajectoire sélectionnée vers une position cible correspondant à la position géographique reçue à l'aide de la représentation générée d'au moins une partie de l'environnement entourant le véhicule en : déterminant une pluralité de trajectoires potentielles vers la position cible et en sélectionnant la trajectoire potentielle ayant la valeur de coût optimale comme trajectoire sélectionnée vers la position cible, une valeur de coût de chaque trajectoire potentielle étant déterminée sur la base des valeurs de coût d'un ensemble d'emplacements de grille de la grille d'occupation traversés par la trajectoire potentielle correspondante ; et
fournir (311) au moins une commande pour naviguer automatiquement le véhicule sur la base de la trajectoire sélectionnée et de données d'image mises à jour provenant d'au moins une partie du ou des capteurs de caméra du véhicule.
